**Europäisches Patentamt**

**European Patent Office**

**Office européen des brevets**

(19)

(11) Veröffentlichungsnummer: **0 132 219**

**A1**

(12) # EUROPÄISCHE PATENTANMELDUNG

(21) Anmeldenummer: **84730076.1**

(22) Anmeldetag: **09.07.84**

(51) Int. Cl.⁴: **F 16 L 58/10**
**F 16 L 9/14, B 32 B 15/08**

(30) Priorität: **14.07.83 DE 8320528 U**

(43) Veröffentlichungstag der Anmeldung:
**23.01.85 Patentblatt 85/4**

(84) Benannte Vertragsstaaten:
**AT BE CH DE FR GB LI NL**

(71) Anmelder: **MANNESMANN Aktiengesellschaft**
**Mannesmannufer 2**
**D-4000 Düsseldorf 1(DE)**

(72) Erfinder: **Landgraf, Helmut, Dipl.-Phys.**
**Aubruchsgraben 90**
**D-4100 Duisburg 46(DE)**

(72) Erfinder: **Scholz, Dankmar, Dipl.-Ing.**
**Heidelberger Ring 31**
**D-6671 Frankental(DE)**

(74) Vertreter: **Meissner, Peter E., Dipl.-Ing. et al,**
**Herbertstrasse 22**
**D-1000 Berlin 33(DE)**

(54) **Korrosionsschutzbeschichtetes Rohr mit mechanischer Schutzschicht.**

(57) Die Erfindung betrifft ein Verfahren zum Herstellen einer Schutzschicht gegen mechanische Angriffe auf ein Rohr, daß aus korrosionsempfindlichem Material und einer darauf befindlichen Korrosionsschutzbeschichtung aus Kunststoff besteht.

Um für ein derartiges Rohr eine mechanische Schutzschicht anzugeben, die eine hohe Verformbarkeit aufweist und gleichzeitig eine ausreichende Härte besitzt, um auch vor der Einwirkung scharfkantiger Felsstücke bei der Verlegung von Rohrleitungen sicher zu schützen, wird erfindungsgemäß vorgeschlagen, daß auf die Korrosionsschutzbeschichtung eine mindestens 1 mm dicke aus Glasfasern Füllstoffen und härtbarem Polyesterharz gebildete Schicht aufgetragen und anschließend zum Aushärten gebracht wird.

Fig.1

EP 0 132 219 A1

Die Erfindung betrifft ein Verfahren zum Herstellen einer Schutzschicht gegen mechanische Angriffe auf ein Rohr gemäß dem Oberbegriff des Anspruchs 1 und ein Rohr aus einem korrosionsempfindlichen Material mit einer äußeren Korrosionsschutzbeschichtung aus Kunststoff und einer darum gelegten mechanischen Schutzschicht. Für die Korrosionsschutzbeschichtung kommen duroplastische oder thermoplastische Kunststoffe oder auch Kombinationen beider Werkstoffgruppen in Frage (z.B. Epoxyharz, Polyäthylen). Eine Korrosionsschutzschicht kann beispielsweise in Form eines thermoplastischen Doppelschlauches, der aus einer inneren Kleberschicht aus Äthylencopolymerisat und einer darüber liegenden Polyäthylenschicht besteht, nach einem aus der DE-OS 19 57 078 bekannten Verfahren auf ein erwärmtes Stahlrohr aufgebracht werden. Es ist seit vielen Jahren bekannt, eine solche Korrsoionsschutzschicht durch eine darüber gelegte äußere Mantelschicht vor mechanischen Beschädigungen z.B. beim Transport von Rohrleitungsstücken, insbesondere jedoch bei der Verlegung von Rohrleitungen z.B. in felsigen Böden zu schützen. Eine solche mechanische Schutzschicht kann beispielsweise aus einer im Vergleich zur Korrosionsschutzschicht aus weniger hochwertigem Polyäthylen bestehenden, mehrere Millimeter dicken Polyäthylenschicht bestehen (Firmenbroschüre: Mannesmann Stahlrohre mit Kunststoffummantelung, 1964). Auch die Verwendung von Bitumen oder Wollfilzpappe für diesen Zweck ist seit Jahren bekannt. Ferner sind mechanische Schutzschichten aus einem plastischen zementhaltigen Mörtel bekannt; ein hierfür geeignetes Auftragungsverfahren ist unter dem Aktenzeichen DE 32 06 582 vorgeschlagen worden.

- 2 -

Bei diesem Verfahren werden Stahlrohre, die nach Erwärmung mit einer Mantelfolie aus Polyäthylen nach dem Wickelverfahren beschichtet worden sind und anschließend in einer Kühlstrecke abgekühlt wurden, nach Verlassen der Kühlstrecke mit einem porösen oder weitmachigen Bandageband, welches mit einem plastischen zementhaltigen Mörtel getränkt oder beschichtet ist, umwickelt, wobei der Kunststoffmantel durch Regeln der Kühlung in der Kühstrecke auf eine Temperatur gebracht wurde, welche der Zusammensetzung des Zementmörtels angepaßt ist und dessen Aushärtung beschleunigt. Das Umwickeln des Stahlrohres mit dem Bandageband für den mechanischen Schutz erfolgt ebenso wie das Aufbringen des Folienbandes für den Korrosionsschutz schraubenlinienförmig.

Ferner ist aus der DE-OS 31 22 347 ein Verfahren zum Auftragen einer mechanischen Schutzbeschichtung durch Aufschleudern eines Gemisches aus einem zementhaltigen Material, polymeren Feststoffen und zerhackten Fasern oder Flocken mittels rotierender Bürsten auf ein mit einem Korrosionsschutz beschichtetes Rohr bekannt. Schließlich ist es bekannt, um das Rohr herum eine Kunststoffmatte als sogenannte Felsschutzmatte lose herumzulegen.

Den bekannten Lösungen auf Basis Kunststoffe, Bitumen oder Wollfilzpappe haftet der Nachteil an, daß die Widerstandsfähigkeit der mechanischen Schutzschicht aufgrund der verwendeten relativ weichen Werkstoffe in manchen Fällen nicht ausreicht, um die Beschädigung der Korrosionsschutzschicht durch scharfkantige Felsstücke beim Verlegen einer Rohr-

- 3 -

leitung zu vermeiden. Die Lösungen auf der Basis zementhaltiger Materialien haben dagegen den Nachteil, daß sie nur eine vergleichsweise geringe Verformbarkeit aufweisen und z.B. durch Biegen beim Transport oder beim Verlegen zum Brechen der mechanischen Schutzschicht führen können.

Aufgabe der Erfindung ist es daher, für ein Rohr aus einem korrosionsempfindlichen Material, das mit einer äußeren Korrosionsschutzbeschichtung aus Kunststoff versehen wurde, eine mechanische Schutzschicht anzugeben, die eine hohe Verformbarkeit aufweist und gleichzeitig eine ausreichende Härte besitzt, um auch vor der Einwirkung scharfkantiger Felsstücke bei der Verlegung von Rohrleitungen sicher zu schützen.

Gelöst wird diese Aufgabe erfindungsgemäß mit den Merkmalen in den Ansprüchen 1 und 3.

Vorteilhafte Weiterbildungen der Erfindung sind in den Unteransprüchen angegeben.

Die Erfindung geht von dem Gedanken aus, die äußere Korrosionsschutzschicht eines Rohres, z.B. eines Stahlrohres, mit einem möglichst harten, aber elastischen Werkstoff einzuhüllen, um einen dauerhaft wirksamen Schutz vor mechanischer Beschädigung der Korrosionsschutzschicht zu gewährleisten.

Erfindungsgemäß wird hierzu eine Umhüllung einer mindestens 1 mm dicken Schicht auf der Basis eines Polyesterharzes, die mit Glasfasern verstärkt und mit üblichen Füllstoffen (z.B. Quarzsand) gefüllt ist, vorgesehen. Durch die Härte dieser Schicht wird erreicht, daß die Druckkräfte, die während der Verlegung der Rohre z.B. in felsigen Böden durch das schlagartige Auftreffen von scharfkantigen Felsstücken oder bei bereits verlegten Rohren durch die Erdlast, die auf solchen scharfkantigen, auf dem Rohr aufliegenden Felsstücken haftet, örtlich zu sehr hohen Flächenpressungen führen können, über eine größere Fläche verteilt und somit bei reduzierter Flächenpressung ohne Beschädigung über die mechanische Schutzschicht so hoch verformbar, daß sowohl elastische als auch plastische Verformungen des eigentlichen Rohrkörpers, wie sie beim Transport von Rohren bzw. bei der Verlegung üblicherweise vorkommen, ohne Beschädigung der mechanischen Schutzschicht möglich sind. Eine derartige mechanische Schutzschicht besitzt eine dauerhaft hohe Festigkeit, da sie auch gegen äußere chemische Angriffe die z.B. durch Huminsäuren im Erdboden hervorgerufen werden können eine hohe Beständigkeit zeigt.

In Weiterbildung der Erfindung wird vorgeschlagen, die mechanische Schutzschicht auf der Basis eines UV-Licht-härtenden Polyesterharzes mit transluzenten Füllstoffen zu bilden. Solche Polyesterharze sind z.B. in der DE-OS 29 31 379 beschrieben. Sie zeichnen sich gegenüber den normalen, peroxidisch härtenden Polyesterharzen im ungehärtetem Zustand durch eine erhöhte Verformbarkeit und in gehärtetem Zustand durch eine verbesserte Chemikalienbeständigkeit aus.

Ein besonderer Vorteil ergibt sich für den Beschichtungsvorgang aus der Härtbarkeit des Polyesterharzes durch
Einwirkung von UV-Licht. Durch die beliebig steuerbare
Bestrahlung des auf die Korrosionsschutzbeschichtung aufgetragenen Polyesterharz-Gemisches mit UV-Licht kann
einerseits der Zeitpunkt der Härtung beliebig gewählt werden;
das nicht gehärtete Polyesterharz ist über lange Zeit
haltbar (bei peroixisch härtenden Harzen ist die Aushärtung
unter Betriebsbedingungen nach Zugabe des Peroxids nicht
mehr zu stoppen).

Andererseits läßt sich durch eine intensive UV-Bestrahlung
eine sehr schnelle Aushärtung erreichen, so daß eine Integration des Verfahrensablaufes für die mechanische Schutzbeschichtung in einen Beschichtungsablauf für das Aufbringen
der Korrosionsschutzbeschichtung mit hoher Produktionsleistung ohne Schwierigkeiten möglich ist.

Mit Vorteil lassen sich als Füllstoff für die mechanische
Schutzschicht gemahlene Glasabfälle mit einer Korngröße
von bis zu 1mm verwenden, da sie eine hohe Härte besitzen
und wegen ihrer Lichtdurchlässigkeit auch die UV-Licht-
Härtung des Polyesterharzes zulassen.

Wird der Anteil des Polyesterharzes an der mechanischen
Schutzschicht unter 25 Volumen-Prozent gehalten, kann das
Harz die zwischen den Füllstoffkörnern und den Glasfasern
bestehenden Hohlräume nur teilweise ausfüllen, so daß eine
poröse, aber mechanisch dennoch widerstandsfähige Umhüllung
entsteht. Aufgrund der Porosität läßt sich eine verlegte Rohrleitung dann zusätzlich zum passiven Korrosionsschutz auch anodisch schützen, da der anodische Schutzstrom durch die mechanische Schutzumhüllung zur Korrosionsschutzbeschichtung hindurchtreten kann.

Dem gleichen Zweck, eine Porosität der Umhüllung zu erzielen, dient es, als Füllstoffe wasserlösliche Materialien (z.B. NaCl) zu verwenden. Diese bieten den Vorteil, eine bei Verletung der Rohre noch weitgehend dichte mechanische Schutzschicht von hoher mechanischer Festigkeit zu haben. Erst allmählich wird nach der Verlegung durch Wassereinwirkung im Erdreich das eingebettete NaCl ausgeschwemmt, so daß in der mechanischen Schutzschicht die für einen anodischen Korrosionsschutz erforderliche Porosität entsteht.

Anhand des nachfolgenden Beispiels, das in der Zeichnung im Prinzip dargestellt ist, wird die Erfindung näher erläutert.

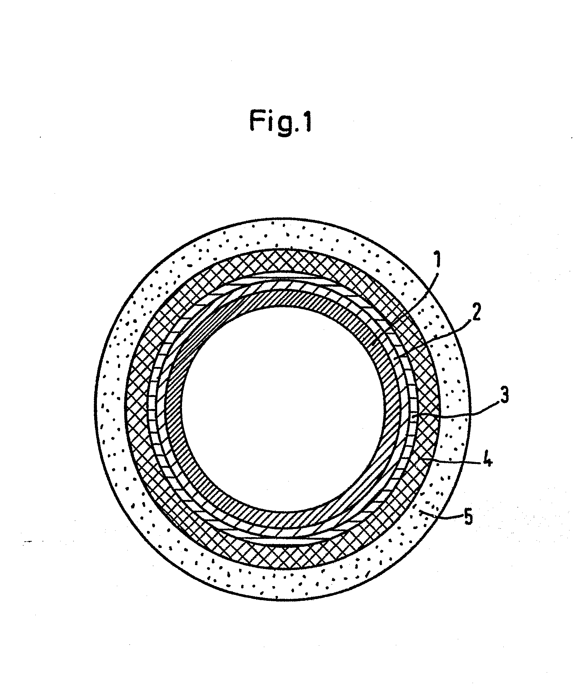

Fig. 1 zeigt einen Querschnitt durch ein Rohr mit einer mehrlagigen Korrosionsschutzbeschichtung und einer nechanischen Schutzschicht.

Ein Stahlrohr 1 von 150 mm Durchmesser ist außen zunächst mit einer 50 u dicken Epoxyharzschicht 2 umhüllt. Darüber liegt eine etwa 200 u dicke Kleberschicht 3 aus Äthylencopolyme copolymerisat und darauf eine 0,75 mm dicke Polyäthylenschicht 4. Diese 3-lagige Korrosionsschutzbeschichtung wurde in einer Rohrbeschichtungsanlage aufgebracht, in der nach dem Auftragen der Epoxyharzschicht 2 das erwärmte Stahlrohr 1 mit einem thermoplastischem Doppelschlauch aus Äthylencopolymerisat und Polyäthylen umhüllt wurde. Über die Korrosionsschutzbeschichtung ist eine 2 mm dicke poröse mehcanische Schutzschicht 5 aus 25 Volumen-Prozent UV-Licht-gehärtetem Polyesterharz, 25 Volumen-Prozent Glasfasern und 50 Volumen-Prozent Füllstoffen aus gemahlenem Glasabfall (Körnung 0,1 - 1 mm) gelegt. Diese mechanische Schutzschicht 5 wurde in der Rohrbeschichtungsanlage hinter der Kühlstrecke für die Abkühlung der thermoplastischen Ummantelung durch Einhüllen des Stahlrohres 1 in eine mit gefülltem Polyesterharz getränkte Glasfasermatte aufgebracht, die anschließend durch UV-Bestrahlung ausgehärtet wurde.

Patentansprüche

Patentansprüche
_____

1. Verfahren zum Herstellen einer Schutzschicht gegen mechanische Angriffe auf ein Rohr, daß aus korrosionsempflichem Material und einer darauf befindlichen Korrosionsschutzbeschichtung aus Kunststoff besteht, dadurch gekennzeichnet, daß auf die Korrosionsschutzbeschichtung eine mindestens 1 mm dicke aus Glasfasern, Füllstoffen und härtbarem Polyesterharz gebildete Schicht aufgetragen und anschließend zum Aushärten gebracht wird.

2. Verfahren nach Anspruch 1, dadurch gekennzeichnet, daß ein UV-lichthärtendes Polyesterharz verwendet wird, daß die Füllstoffe transluzent sind und daß die aufgetragene Schuztschicht durch UV-Bestrahlung gehärtet wird.

3. Rohr aus einem korrosionsempflindlichen Material mit einer äußeren Korrosionsschutzbeschichtung aus Kunststoff und einer darum gelegten mechanischen Schutzschicht, dadurch gekennzeichnet, daß die mechanische Schutzschicht (5) aus gehärtetem Polyesterharz, das mit Glasfasern verstärkt und mit Füllstoffen gefüllt ist, gebildet ist und eine Dicke von mindestens 1 mm aufweist.

4. Rohr nach Anspruch 3, dadurch gekennzeichnet, daß das Polyesterharz der mechanischen Schutzschicht (5) ein UV-Licht-härtendes Polyesterharz ist und die Füllstoffe transluzent sind.

- 2 -

5. Rohr nach Anspruch 3 oder 4, dadurch gekennzeichnet, daß die mechanische Schutzschicht (5) als Füllstoff gemahlene Glasabfälle mit einer Korngröße von bis zu 1 mm enthält.

6. Rohr nach einem der Ansprüche 3 bis 5, dadurch gekennzeichnet, daß die mechanische Schutzschicht (5) weniger als 25 Volumen-Prozent Polyesterharz enthält.

7. Rohr nach einem der Ansprüche 3 bis 6, dadurch gekennzeichnet, daß die mechanische Schutzschicht (5) wasserlösliche Füllstoffe, z.B. NaCl, enthält.

-----------------

Fig.1

EUROPÄISCHER RECHERCHENBERICHT

0132219

Nummer der Anmeldung

| EINSCHLÄGIGE DOKUMENTE | | EP 84730076.1 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 -2 944 809 (KENDALL CO.)<br>* Gesamt *<br>---- | 1,3 | Int.Cl.⁴<br><br>F 16 L 58/10<br>F 16 L 9/14<br>B 32 B 15/08 |

RECHERCHIERTE SACHGEBIETE (Int. Cl. ³)

F 16 L 9/00
F 16 L 57/00
F 16 L 58/00
B 32 B 15/00

Der vorliegende Recherchenbericht wurde für alle Patentansprüche erstellt.

| Recherchenort | Abschlußdatum der Recherche | Prüfer |
|---|---|---|
| WIEN | 04-09-1984 | SCHUGANICH |